# EUROPÄISCHE PATENTANMELDUNG

(11) **EP 4 549 129 A1**
(43) Veröffentlichungstag der Anmeldung: **07.05.2025**
(21) Anmeldenummer: 24209099.1
(22) Anmeldetag: 28.10.2024
(51) Int. Cl.: B29C 48/92, B29C 48/09, G01N 29/22, G01N 29/27, G01N 29/34, B29C 48/12

(54) **ULTRASCHALL-MESSVORRICHTUNG UND VERFAHREN ZUM VERMESSEN VON EXTRUSIONSPRODUKTEN, SOWIE EXTRUSIONSSTRECKE**

(30) Priorität: 01.11.2023 DE 102023130214
(71) Anmelder: CiTEX Holding GmbH, 49324 Melle (DE)
(72) Erfinder: Nerling, Christoph, 31737 Rinteln (DE)
(74) Vertreter: Bremer, Ulrich

(57) **Zusammenfassung**

Die Erfindung betrifft eine Ultraschall-Messvorrichtung (8) zum Vermessen von Extrusionsprodukten (5) in einer Extrusionslinie, wobei die Ultraschall-Messvorrichtung aufweist
- mehrere Sensoren (9a, 9b, 9c, 9d, 9x), die jeweils Ultraschallwellen (14) aussenden und reflektierte Ultraschallwellen detektieren, wobei die Sensoren (9a, 9b, 9c, 9d, 9x) um eine Achse (A) herum verteilt und auf die Achse (A) ausgerichtet sind,
- eine Steuereinrichtung (10) zum Ansteuern der Sensoren (9a, 9b, 9c, 9d) und Aufnehmen der Messsignale der Sensoren,
**dadurch gekennzeichnet, dass**
die mehreren Sensoren (9i) zueinander
- aufeinanderfolgend in sowohl Umfangsrichtung um die Achse (A) als auch in Richtung der Achse (A) zueinander versetzt angeordnet sind, und/oder
- helixförmig oder schraubenförmig um die Achse (A) herum angeordnet sind,

wobei die Steuereinrichtung (10) die Sensoren (9i) derartig ansteuert, dass jeweils ein Sensor (9a) sendet und detektiert und die anderen Sensoren (9b, 9c, 9d, 9i) passiv detektieren.

## Beschreibung

Die Erfindung betrifft eine Ultraschall-Messvorrichtung und ein Verfahren zum Vermessen von Extrusionsprodukten, sowie eine Extrusionsstrecke mit der Ultraschall-Messvorrichtung.

In Extrusionsprozessen werden unter anderem Rohre, Profile und Folien aus Kunststoff, zum Beispiel auch Schaum, hergestellt. Um diese Produkte genau und kostengünstig herzustellen, sind Schichtdickenmessungen bekannt, bei denen die Extrusionsprodukte inline, d. h. während der Fertigung in der Extrusionsstrecke vermessen werden. Somit kann bei Feststellen von Fehlern direkt die Produktion unterbrochen oder nachgestellt werden. Insbesondere bei Rohren ist eine genaue Ermittlung der Schichtdicke erforderlich. Bei Gasrohren und anderen Hochpräzisionsrohren sind 100 %-Messungen üblich, bei denen die Rohre vollumfänglich vermessen werden.

Weiterhin sind Extrusionverfahren zum Aufbringen einer Kunststoff- oder Gummihülle bzw. Kunststoff- oder Gummischicht um einen inneren Kern bekannt, wobei eine derartige Extrusionsbeschichtung oder Extrusions-Ummantelung insbesondere zur Herstellung von Kabeln, elektrischen Leitungen und z.B. auch Drähten eingesetzt wird, da durch die Extrusion ein kostengünstiges Endlosverfahren unter Ausbildung gleichmäßiger Schichten ermöglicht wird. Auch bei diesen Produkten ist somit die Gewährleistung konstanter Schichtdicken ohne Fehler wichtig

Bei Ultraschallmessungen werden Extrusionsprodukte durch ein Koppelmedium, im Allgemeinen Wasser, geführt, und Schichtdicken durch Laufzeitmessungen ermittelt. Hierbei wird die Zeit zwischen Senden und Empfangen der Signale bestimmt, wobei die Auflösung durch die räumliche Anordnung der Sensoren und die Schallgeschwindigkeit im Koppelmedium Wasser festgelegt wird. DE 197 41 586 C1, DE 198 41 064 A1 und EP 1 025 419 B1 zeigen derartige Ultraschall-Messsysteme.

Hierbei ist es bekannt, Sensoren in einem Messring kreisförmig um das Extrusionsprodukt anzuordnen. Eine derartige Messanordnung ist einfach herzustellen und kostengünstig. Die von einem Sensor ausgesandten Signale können grundsätzlich von dem Sensor selbst oder einem nebenstehenden erfasst werden. Werden viele Sensoren benötigt, um eine vollständige, also 100 %-Messung des Rohres zu ermöglichen, so wird der Abstand erhöht und die notwendige Anzahl der Sensoren um das Rohr platziert. EP 1 032 804 B1 zeigt eine derartige Messvorrichtung.

Die Sensoren sind somit jeweils Sender und Empfänger; sie senden ein Signal als Ultraschallwellen aus und empfangen das reflektierte Signal nach einer Laufzeit wieder. Bei der Vermessung von Rohren wird im Allgemeinen die vordere Rohrwand vermessen, die an ihrer Außenfläche und Innenfläche jeweils eine Reflexion von Ultraschallwellen ermöglicht, so dass zwei zurücklaufende, kurz aufeinander folgende Peaks erzeugt und gemessen werden können.

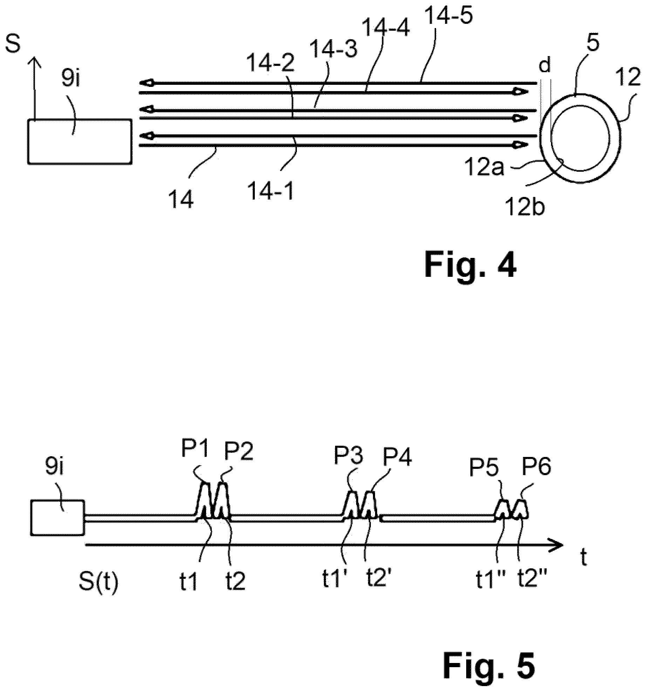

Figur 4 und 5 zeigen ein herkömmliches Messprinzip eines Sensors 9a bei der Vermessung eines Rohres 5 mit einer Rohrwand 12, die eine Schichtdicke d aufweist. Der Sensor 9i sendet Ultraschallwellen 14 durch das Koppelmedium auf die Rohrwand 12 des Rohres 5, wobei die Ultraschallwellen 14 zunächst an der Außenfläche 12a der Rohrwand 12 teilweise reflektiert werden, und teilweise in die Rohrwand 12 eindringen, wobei an der Innenfläche 12b wiederum ein Teil der Ultraschallwellen 14 teilreflektiert wird. Die reflektierten Ultraschallwellen 14-1 gelangen zurück zum Sensor 9i und werden dort detektiert, so dass die in Figur 5 gezeigte Laufzeitmessung möglich ist. Figur 5 zeigt das zeitliche Messdiagramm, d. h. das Signal S mit der Zeit t auf der Abszisse. Zum Zeitpunkt t1 wird ein erster Peak P1 detektiert, der der Reflexion an der Außenfläche 12a entspricht; nachfolgend wird zum Zeitpunkt t2 ein zweiter Peak p2 detektiert, der der Reflexion an der Innenfläche 12b entspricht, sodass aus der Zeitdifferenz t2-t1 bei bekannter Schallgeschwindigkeit die Schichtdicke d bestimmt wird.

Es treten jedoch nachfolgend oftmals erneute Reflexionen der reflektierten Ultraschallwellen 14-1 am Sensor 9i auf, die somit als zweimal reflektierte Ultraschallwellen 14-2 wiederum zur Rohrwand 12 das Rohres 5 gelangen und von dort wiederum als sogenannte Rückläufer, d.h. hier als dreifach reflektierte Ultraschallwellen 14-3, zum Sensor 9i gelangen, wo sie zu den Zeitpunkten t1 'und t2' die Peaks P3 und P4 erzeugen. Nachfolgend können die Rückläufer 14-3 erneut am Sensor 9i reflektiert werden und somit als reflektiert Ultraschallwellen 14-4 erneut zur Rohrwand 12 gelangen, so dass durch erneute Reflexion Rückläufer 14-5 entstehen, die entsprechend zu den Zeitpunkten t1 "und t2" zu Peaks P5 und P6 führen.

Somit führen die Rückläufer zu einem Messsignal S(t) mit einer aufeinanderfolgenden Reihe von Messpeaks, die sich somit mit Messpeaks nachfolgender Messungen überlagern können. Durch diese Rückläufer ist die Zeit und damit die Frequenz der Messung beschränkt. Die Rückläufer nehmen allmählich in ihrer Intensität ab, so dass sie von den neuen Messsignalen unterschieden werden können. So muss im Allgemeinen der dritte Rückläufer abgewartet werden, damit der Sensor wieder senden kann.

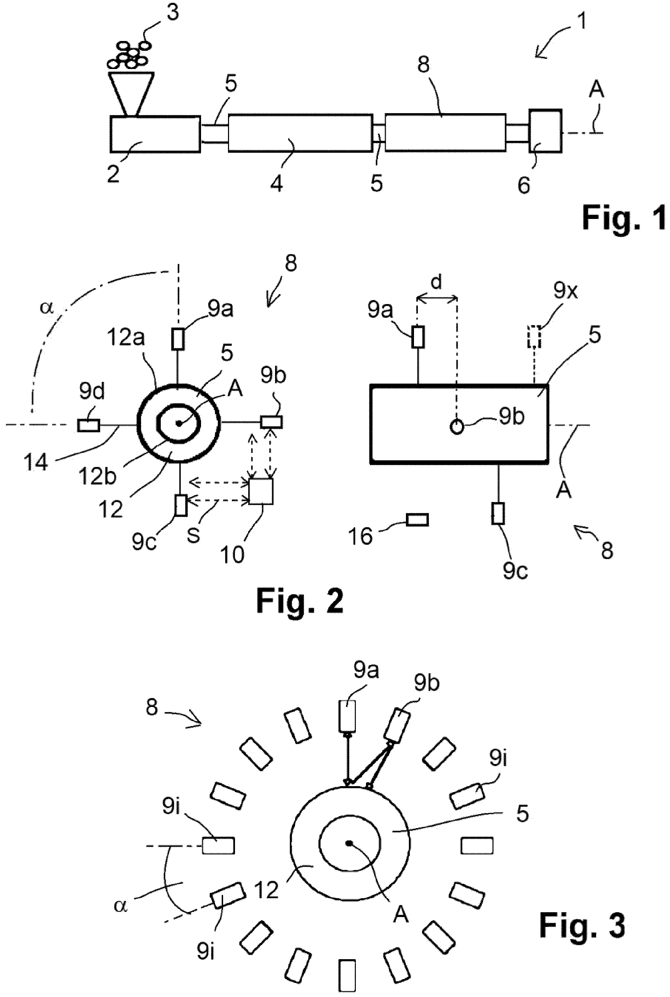

Figur 3 zeigt das Messprinzip einer Aktiv-Passiv-Messung zur vollumfänglichen Vermessung der Rohrwand 12. Die Messvorrichtung 8 weist mehrere Sensoren 9a, 9b, ...9i auf, die kreisförmig um ein Rohr 5 angeordnet und auf das Rohr 5 bzw. die Achse A gerichtet sind. Der aktive Sensor 9a sendet wiederum Ultraschallwellen 14 auf die Rohrwand 12 des Rohres 5, die wie in Figur 4 gezeigt teilweise zurück zu dem aktiven Sensor 9a reflektiert und von diesem sensiert werden. Weiterhin wird ein Teil der Ultraschallwellen 14 auch außerhalb der Sensorachse reflektiert, zum einen aufgrund des Öffnungskegels der Ultraschallwellen 14, die entsprechend an den Flächen 12a, 12b dann nachfolgend schräg reflektiert werden. Weiterhin weisen die Flächen 12a, 12b der Rohrwand 12 Unebenheiten und Fehler auf, wobei auch z. B. Fehler in der Rohrwand 12, z.B. Lunker bzw. Lufteinschlüsse vorliegen können, die somit die Ultraschallwellen 14 schräg reflektieren. Diese schräg reflektierten Ultraschallwellen 14-1 liefern somit relevante Informationen und können bei hinreichender Abdeckung von einem anderen Sensor 9i detektiert werden. Wenn somit der Sensor 9a aktiv ist, sind die anderen Sensoren 9b, ..., 9i zunächst passiv und nehmen als passive Sensoren reflektierte Ultraschallwellen 14-1 auf. Nachdem der Sensor 9a aktiv war, sind nachfolgend die weiteren Sensoren 9b, ..., 9i jeweils aufeinander folgend aktiv, so dass dann die jeweils anderen Sensoren passiv sind und schräg reflektierte Ultraschallwellen 14-1 aufnehmen. Eine derartige Aktiv-Passiv-Messung verbessert die Abdeckung auf dem Rohr 5 und ermöglicht eine Rundumdetektion bzw. 100 %- Messung.

Somit senden bei der Aktiv-Passiv-Messung die mehreren Sensoren 9i sukzessive nacheinander, wobei nach Ausgabe der Ultraschallwellen von einem der Sensoren 9i ergänzend jeweils die oben mit Bezug zu Fig. 4 beschriebenen Rückläufer abzuwarten sind. Als Messfolgefrequenz wird die Frequenz bezeichnet, mit der eine vollständige Messung des Umfangs stattfindet. Somit ist in dem oben beschriebenen System der Figuren 3, 4, 5, d.h. wenn bei der kreisförmigen Anordnung für jeden Sensor 9i der zweite Rückläufer 14-5 zum Zeitpunkt t2" abzuwarten ist, die Messfolgefrequenz auf f = 1/(t2" * n) begrenzt, mit n als Anzahl der Sensoren. Werden sehr kleine Rohre gemessen, so werden zusätzlich an den gegenüberliegenden Sensoren Ultraschallsignale reflektiert, die somit auch als Rückläufer die Messsignale stören können.

Eine vollständige, d. h. 100 %-Messung der Oberfläche, ist bei Gasrohren und anderen hochpräzisen Rohren üblich, kann aber auch bei anderen Extrusionsprodukten erfolgen. Bei dieser Messung wird somit gegebenenfalls die Anzahl der Sensoren erhöht, um den Umfang des Rohres und damit auch die Oberfläche des Rohres vollständig vermessen zu können. Daher ist eine besonders hohe Messfolgefrequenz erforderlich. Somit können auch kleine Fehler im Rohr erkannt und später aussortiert werden. Es wird die Produktion der Rohre vollständig kontrolliert, um die Produktion fehlerbehafteter Rohre zu verhindern und damit jederzeit eine gute Produktion mit wenig Ausschuss zu gewährleisten. Deshalb ist es wichtig, schnell messen zu können, um die vollständige Vermessung der Rohroberfläche zu gewährleisten. So können auch Rohre aus Hochleistungsextrudern mit sehr hohen Produktionsgeschwindigkeiten vermessen werden.

Somit ist bei den oben beschriebenen Messvorrichtungen die Begrenzung der Messfolgefrequenz insbesondere bei 100%-Vermessungen und hohen Produktionsgeschwindigkeiten problematisch.

Die US 8,590,381 B2 zeigt eine Ultraschall-Detektionsanordnung zur Fehlererkennung, die eine interne Fehlererkennung eines zu testenden Materials in ihrem Innenraum ermöglicht, wobei das Material einen kreisförmigen Querschnitt aufweist und mehrere Transducer kreisförmig um das zu untersuchende Material angeordnet sind. Hierbei sind Sonden derartig angeordnet, dass sie das zu testende Material umgeben. Hierbei erzeugt eine Anrege-Einheit Ultraschallwellen, die das zu testende Material auf unterschiedlichen Positionen durchqueren, wobei eine Vielzahl von Transducern gleichzeitig oder zu mehreren Zeiten vibrieren und somit Schallwellen in dem Material ausbilden.

Die DE 10 2005 051 783 A1 beschreibt ein Verfahren und eine Vorrichtung zur bildgebenden Ultraschallprüfung an einem dreidimensionalen Werkstück, bei dem mit einem oder einer Vielzahl von Ultraschallwandlern Ultraschallwellen in das Werkstück eingekoppelt und innerhalb des Werkstückes reflektierte Ultraschallwellen von einer Vielzahl Ultraschallwandern empfangen und in Ultraschallsignale umgewandelt werden, die der zerstörungsfreien bildgebenden Ultraschallprüfung zugrunde gelegt werden. Hierbei werden Ultraschallwandler in räumlicher Verteilung um das Werkstück vorgesehen und sukzessive Ultraschallsignale ausgegeben.

Die DE 10 2006 056 735 A1 beschreibt ein Messverfahren zur Bestimmung der Wanddicke eines extrudierten Kunststoffprofils, insbesondere eines Rohres, nach der Impuls-Echomethode unter Verwendung von mindestens eines unter Zwischenschaltung eines Koppelmediums senkrecht auf die Oberfläche des Kunststoffprofils abstrahlenden Ultraschallsensors zur Erfassung eines Laufzeitunterschiedes zwischen Vor- und Rückwandecho. Hierbei werden Einflüsse von Schwankungen der Körpertemperatur des Kunststoffprofils auf die Messung kompensiert, wobei eine Kalibrierung der Wanddickenmessung vorgesehen ist.

CN 1 11 442 749 B beschreibt ein Verfahren zum Ausführen einer Online Messung des Biegungsgrades eines Stabmaterials mittels Ultraschallwellen. Hierbei wird ein zu untersuchender Stab durch zwei Führungsbuchsen geführt, die in einem Wassertrank vorgesehen sind, wobei der Abstand zwischen einer Ultraschallsonde und der Oberfläche des Stabmaterial aus verschiedenen Richtungen gemessen wird, wobei anschließend der Biegungsgrad des Stabmaterials bewertet wird aufgrund der Abweichung zwischen dem Messwert des Abstandes zwischen der Ultraschallsonde und der Oberfläche gegenüber einem theoretischen Wert.

Der Erfindung liegt die Aufgabe zugrunde, eine Ultraschall- Messvorrichtung und ein Verfahren zum Vermessen von Extrusionsprodukten zu schaffen, die eine sichere und schnelle Vermessung ermöglichen.

Diese Aufgabe wird durch eine Ultraschall-Messvorrichtung und ein Ultraschall-Messverfahren nach den unabhängigen Ansprüchen gelöst. Die Unteransprüche beschreiben bevorzugte Weiterbildungen. Ergänzend ist eine Extrusionsstrecke mit einer erfindungsgemäßen Ultraschall-Messvorrichtung vorgesehen. Die erfindungsgemäße Messvorrichtung ist insbesondere zur Durchführung des erfindungsgemäßen Verfahrens vorgesehen.

Als Extrusionsprodukte können allgemein Rohre, Schläuche, Profile, Folien und auch Kabel und Leitungen vermessen werden. Das Extrusionsmaterial kann durchgängig oder z.B. auch geschäumt sein, wobei insbesondere Kunststoff oder Gummi verwendet wird, auch mit Additiven.

Die Ultraschallsensoren werden nachfolgend Sensoren genannt. Somit werden mehrere Sensoren in einer vorzugsweise helixförmigen Anordnung um die Extrusionsachse bzw. um das Extrusionsprodukt herum positioniert. Die mehreren Sensoren sind insbesondere zueinander zum einen um einen Längsabstand in Axialrichtung der Achse, und zum anderen um einen Versatzwinkel in Umfangsrichtung versetzt, so dass sich insbesondere eine im Wesentlichen helixförmige Anordnung ergibt. Vorteilhafterweise ergibt sich eine genaue helixförmige Anordnung, d. h. eine Beabstandung der mehreren Sensoren mit gleichmäßigem Längsabstand und Versatzwinkel der aufeinanderfolgenden Sensoren.

Somit wird eine Aktiv-Passiv-Messung ermöglicht, wie sie grundsätzlich auch in Fig. 3 gezeigt ist, bei der aber die mehreren Sensoren nicht in einer gemeinsamen Ebene angeordnet sind, sondern aufeinanderfolgend in Extrusionsrichtung verschoben. Hierdurch ist es möglich, die oben genannte Begrenzung der Messfolgefrequenz aufzuheben. Die Sensoren können in einer derartigen Reihenfolge angesteuert werden, dass immer zwischen zwei nahe beieinanderliegenden Sensoren eine Zeit t2" liegt, um relevante Rückläufer abzuwarten.

Somit wird die Messfolgefrequenz nicht mehr durch die benachbarten Sensoren beschränkt, so dass die Messfolgefrequenz nur noch durch die eigenen Rückläufer jedes Sensors, d.h. auf den Wert f = 1/t2" begrenzt wird.

Somit wird durch eine relativ einfache Maßnahme eine überraschend hohe Steigerung der Messfolgefrequenz ermöglicht. Indem die Sensoren in einer Helix angeordnet werden, können Vorteile der Anordnung in einer Ebene, d.h. insbesondere die vollumfängliche Messung, und der Anordnung in Extrusionsrichtung, d.h. insbesondere die Vermeidung ungewollter Reflexionen, kombiniert werden. Somit kann mit einer hohen Messfolgefrequenz gemessen werden und dennoch eine vollständige, d. h. 100 %-Abdeckung, erreicht werden. Hierbei können der Abstand in Extrusionsrichtung und der Versatzwinkel so gewählt werden, dass eine Aktiv-Passiv-Messung zwischen Sensoren, insbesondere benachbarten Sensoren erfolgt und die Abdeckung auf der Rohr-Oberfläche bei relativ geringer Anzahl von Sensoren hoch ist.

Statt einer helixförmigen Anordnung ist grundsätzlich auch eine Anordnung mit anderer Reihenfolge möglich, bei der die in Extrusionsrichtung aufeinander folgenden Sensoren die mehreren Winkelpositionen nicht genau in Umfangsrichtung aufeinander folgend, sondern z.B. mit sprungartigem Versatz einnehmen. Eine helixförmige Anordnung ist aber erfindungsgemäß besonders vorteilhaft, da die Abdeckung hoch ist und sich für jeden der Sensoren eine gleiche Position bzw. Nachbarschaft der Sensoren ergibt, sodass bei hoher Abdeckung ergänzend die Messsignale miteinander verglichen werden können.

Vorteilhafterweise ist von der schraubenförmigen bzw. helixförmigen Anordnung jeweils ein Sensor aktiv, so dass er Ultraschallwellen sendet und empfängt, und die anderen Sensoren passiv, wobei diese Funktion entsprechend durchwechselt. Hierbei sind vorteilhafterweise ein oder mehrere zusätzliche passive Sensoren vorgesehen, insbesondere am Ende der Helix bzw. Spirale, der bzw. die jeweils ein Ultraschallsignal empfangen, ohne aktiv ein Signal zu senden. Dieser mindestens eine zusätzliche passive Sensor stellt somit sicher, dass bei einer derartigen Messung jeweils die gleiche Anzahl von Sensoren die Signale empfängt. Somit können direkt vergleichbare Messsignale erzeugt werden.
Bei einer einzigen Helix, die somit zwei offene Enden hat, ist somit vorzugsweise mindestens ein passiver Sensor vorgesehen, um 360 Grad vollständig abzudecken; bei mehreren ineinander verschränken Helixen, z.B. einer Anzahl von H Helixen, sind entsprechend mindestens H passive Sensoren vorgesehen.

Die erfindungsgemäße Anordnung hat weiterhin den Vorteil, dass sich keine Sensoren direkt gegenüberliegen. Somit wird die Reflexion des Ultraschallsignals am gegenüberliegenden Sensor vermieden, welche insbesondere bei sehr kleinen Rohren oder Schläuchen stört. So sind bei kleinen Rohren aufgrund des geringen Durchmessers die Ultraschallsignale klein und die durch die gegenüberliegenden Sensoren reflektierten Ultraschallsignale relativ groß.

Gemäß einer vorteilhaften Ausbildung können zusätzliche Reflektoren angebracht werden, welche die rücklaufenden Signale ausblenden. Auch dämpfende Elemente, in denen die Ultraschallsignale auslaufen, können dem Sensor gegenüberliegend angebracht werden, was z.B. bei einer kreisförmigen Anordnung nicht möglich ist. Hierdurch kann die Messfolgefrequenz weiter erhöht werden, insbesondere auf einen Wert bis zu IFF = 1/t1 ", der sich aus der Messfrequenz jedes Sensors ohne Rückläufer ergibt.

Die erfindungsgemäße Messvorrichtung unterscheidet sich somit auch von z.B. einem System mit zwei Messebenen, in denen jeweils eine Messung, z.B. auch jeweils eine Aktiv-Passiv-Messung durchgeführt wird, da erfindungsgemäß nicht getrennte Messungen in mehreren Ebenen, sondern eine Aktiv-Passiv-Messung zwischen den in Extrusionsrichtung versetzten Sensoren erfolgt, und erst durch die mehreren in Extrusionsrichtung versetzten Sensoren die Abdeckung in Umfangsrichtung erreicht wird.

Erfindungsgemäß können mehrere Spiralen bzw. Helix-Anordnungen von Sensoren ineinander verschachtelt sein, d. h. die mehreren Spiralen sind in Axialrichtung zueinander versetzt. Die Anzahl der Sensoren in einer Helix bzw. Spirale grundsätzlich nicht begrenzt, d.h. es können beliebig viele Sensoren in einer Helix vorgesehen sein.

Vorzugsweise sind lediglich eine oder mehrere Helix-Anordnungen bzw. Spiralen vorgesehen. Insbesondere wird in jeder Helix die Reihe von Sensoren seriell angesteuert. Insbesondere werden weitere Sensoren außerhalb der Helix, insbesondere Sensoren, deren Schallwellen sich mit den Sensoren der Helix überlappen, nicht angesteuert.

Bei der seriellen Ansteuerung einer Helix kann die Reihenfolge der Ansteuerung der Sensoren der geometrischen Reihenfolge in der Helix entsprechen oder auch von der geometrischen Reihenfolge in der Helix abweichen, sodass eine gegenüber der geometrischen Anordnung springenden Ansteuerung erreicht wird. Bei einer Helix von z.B. 20 Sensoren, d.h. der geometrischen Anordnung von Sensor 1 bis Sensor 20 in der Helix, kann z.B. die Ansteuerung in der Reihenfolge Sensor 1, Sensor 10, Sensor 2, Sensor 11 erfolgen. Hierdurch können unter anderem auch die gegenseitige Beeinflussung der Sensoren verringert werden, auch ist die elektronische Ansteuerung erleichtert.

Somit können erfindungsgemäß auch sehr schnell laufende Extrusionsprodukte wie Rohre mit einer hohen, insbesondere 100%-Abdeckung, sicher vermessen werden.

Weiterhin können beabstandete Sensoren aber nicht nur in der Reihenfolge direkt nacheinander, sondern auch zeitlich überlappend oder auch gleichzeitig senden, insbesondere wenn die Reflexionen sich nicht oder nicht relevant überlappen und somit die passiven Sensoren nur Signale von einem der sendenden Sensoren aufnehmen. Diese Ausbildung kann somit grundsätzlich auch als Betrieb mehrerer aneinander gereihter Teil- Helixen ausgelegt werden, die zusammen die Helix bilden, wobei in jeder der Teil- Helixen jeweils ein Sensor aktiv ist. So kann z.B. die Helix weit genug auseinandergezogen werden, um bei einem sich zeitlich überlappenden Betrieb den Empfang von Reflexionen von zwei sendenden Sensoren zu vermeiden. So kann z.B. in einer Helix mit 36 Sensoren z.B. Sensor 1 und Sensor 18 gleichzeitig oder wenig versetzt (um die elektronische Ansteuerung zu verbessern) betrieben werden, um damit weitere Geschwindigkeit zu gewinnen. Grundsätzlich können gegebenenfalls auch vier Sensoren gleichzeitig betrieben werden, wenn die Abstände, d.h. insbesondere die Längsabstände, ausreichend sind und z.B. jeweils Sensoren mit 90 Grad Winkelversatz angesteuert werden.

Hierbei ist als "ein Empfang von unerwünschten Reflexionen vermeiden" oder "wenn die Reflexionen sich nicht oder nicht relevant überlappen" insbesondere zu verstehen, dass von einem Sensor, der von einem der aktiven Sensoren Reflexionen empfängt, nicht zusätzlich erste, zweite oder dritte Reflexionen der Signale eines anderen aktiven Sensors empfängt, da die höheren Reflexionen - wie oben ausgeführt - im Allgemeinen zu schwach sind.

Gemäß einer weiteren Ausbildung können aber auch gezielt Anordnungen von z.B. zwei Helixen vorgesehen sein, bei denen sich z.B. zwei Sensoren gegenüber liegen, um hier eine direkte Durchgangsmessung zu ermöglichen, insbesondere für die direkte Ermittlung einer Abmessung wie z.B. eines Innendurchmessers und/oder Außendurchmessers.

Aus den Messsignalen können erfindungsgemäß insbesondere eine oder mehrere der folgenden Eigenschaften ermittelt werden;
- eine oder mehrere Schichtdicke(n),
- ein Außendurchmesser und/oder Innendurchmesser,
- Fehler, z. B. Lunker, d.h. Lufteinschlüsse, und/oder Einschlüsse wie z.B. von Abbrand, und/oder
- Unregelmäßigkeiten der Flächen, z.B. auch ein Sagging, das als leichte Deformation der Innenwand eines Rohres aufgrund des herabfließendes Materials entsteht und innerhalb von Toleranzen zulässig ist, wenn die Schichtdicke nicht stellenweise zu dünn wird,
- Materialeigenschaften des Extrusionsproduktes, insbesondere eine Schallgeschwindigkeit im Material und/oder eine akustische Impedanz, wobei aus diesen Materialeigenschaften z.B. auf die Zusammensetzung des Materials und/oder die Temperatur und/oder eine Verfestigung geschlossen werden kann.

Weiterhin kann in Abhängigkeit der Messung und Ermittlung eine Regelung der Extrusionsstrecke vorgenommen werden, z.B. durch Ansteuerung des Extruders und/oder des Abzugs, um geometrische Eigenschaften u Materialeigenschaften des Extrusionsproduktes direkt verändern zu können. Somit ermöglicht die schnelle und sichere erfindungsgemäße Vermessung auch eine vorteilhafte Regelung.

Die Erfindung wird im Folgenden anhand der beiliegenden Zeichnungen an einigen Ausführungsformen näher erläutert. Es zeigen:
- Fig. 1: eine Extrusionsstrecke mit Ultraschall-Messvorrichtung gemäß einer Ausführungsform der Erfindung;
- Fig. 2: links eine Axialansicht und rechts eine Seitenansicht eines extrudierten Rohres mit einer Ultraschall-Messvorrichtung gemäß einer Ausführungsform der Erfindung;
- Fig. 3: eine Axialansicht einer Messvorrichtung in Aktiv-Passiv-Messung;
- Fig. 4: eine Darstellung einer Aktivmessung mit zwei Rückläufern;
- Fig. 5: das Messsignal der Messung von Figur 4.

Die Extrusionsstrecke 1 der Figur 1 weist einen Extruder 2, einen Kühltank 4 und einen Abzug 6 mit Säge auf. Dem Extruder 2 wird in seinen Trichter Schüttgut 3 zugeführt, das von dem Extruder 2 fortlaufend aufgeschmolzen und als Rohr 5 entlang einer Achse A extrudiert wird. Das Rohr 5 wird durch den am Ende der Extrusionsstrecke 1 vorgesehenen Abzug 6 gezogen und hierbei durch den Kühltank 4 geführt, in dem das zunächst aus heißem, aufgeschmolzenen Material gebildete Rohr 5 abgekühlt wird. An der Extrusionsstrecke 1 sind ein oder mehrere Ultraschall-Messvorrichtungen 8 vorgesehen, z.B. wie gezeigt zwischen Kühltank 4 und Abzug 6, oder auch bereits vor dem Kühltank 4. Die Ultraschall-Messvorrichtung 8 weist gemäß Figur 2, 3 jeweils mehrere Sensoren 9i, d.h. 9a, 9b, 9c, 9d... auf, d.h. mit der allgemeinen Indizierung eines Sensors als Sensor 9i, wobei i= a, b, c, d, ,,,. Als 9x werden ein oder mehrere, weiter unten beschriebene passive Sensoren bezeichnet, die die Messung ergänzen.

Eine in Fig. 2 links angedeutete Steuereinrichtung 10 steuert die Ultraschall- Messvorrichtung 8, indem sie die Messfolge der einzelnen Sensoren 9i festlegt und die Messsignale S(t) der einzelnen Sensoren 9i aufnimmt und gemeinsam auswertet. Die Steuereinrichtung 10 kann z.B. auch mehrteilig aufgebaut sein, z.B. auch mit in den einzelnen Sensoren 9i vorgesehenen Komponenten.

Bei der erfindungsgemäßen Ultraschall-Messvorrichtung 8 sind die mehreren Sensoren 9a, 9b, 9c, 9d, ..., 9i nicht nur in Umfangsrichtung um die Rohrwand 12 bzw. die Achse A versetzt, sondern zusätzlich in Extrusionsrichtung, d. h. entlang der Achse A. Somit ergibt sich eine Anordnung der einzelnen Sensoren 9i in einer helischen bzw. schraubenförmigen Anordnung, mit überlagertem Versatz in Umfangsrichtung und Längsrichtung. Vorteilhafterweise wird eine gleichmäßige Helix ausgebildet und in Reihenfolge der Helix angesteuert, d.h. von einem Ende zum anderen.

Fig. 2 zeigt eine Ausführungsform einer erfindungsgemäßen Ultraschall-Messvorrichtung 8 mit vier Sensoren 9a, 9b, 9c, 9d, die somit zueinander jeweils in Umfangsrichtung um einen Versatzwinkel alpha = 90° und in Extrusionsrichtung bzw. entlang der Achse A um jeweils einen Längsabstand d versetzt sind. Da die mehreren Sensoren 9a, 9b, 9c, 9d nicht in einer Ebene liegen, sondern in Extrusionsrichtung bzw. in Richtung der Achse A versetzt sind, liegen sich keine Sensoren direkt gegenüber. Grundsätzlich können sehr viele Sensoren 9i so angeordnet werden, der Einfachheit halber sind hier nur vier Sensoren gezeigt. Oft werden z.B. zwölf bis sechsundreißig Sensoren 9i genutzt, d.h. i= 1,...,36..

Vorzugsweise ist hierbei wie in Fig. 2 rechts gezeigt ein weiterer Sensor 9x in der darauffolgenden Position der Helix, d.h. wiederum in gleicher Umfangsposition wie der erste Sensor 9a und in Richtung der Achse A hinter dem Sensor 9d vorgesehen, der in den Messungen jeweils passiv empfängt, jedoch nicht anschließend aktiv sendet, d.h. er wird in der Reihenfolge der aktiven Ansteuerung der Sensoren 9i übergangen, so dass nach dem Sensor 9d wieder der Sensor 9a sendet. Hierdurch kann erreicht werden, dass die Sensoren 9i jeweils grundsätzlich gleiche bzw. gleichartige Wellenmuster detektieren und somit ihre Signale S auch miteinander vergleichbar sind.

Fig. 3 zeigt - entsprechend Fig. 2 links -eine Ultraschall- Messvorrichtung 8 mit mehreren Sensoren 9i und Aktiv-Passiv-Messung in Axialsicht, wobei in dieser Ansicht, d.h. ohne Darstellung des Längsabstands in Axialrichtung, sich in Fig. 3 die gleiche Darstellung wie in grundsätzlich bekannten Vorrichtungen mit ebener Anordnung der Sensoren ergibt, siehe die Ausführungen oben zu Fig. 3. Bei der erfindungsgemäßen Ausbildung mit Längsabstand d kann wiederum der letzte Sensor 9x in der helischen Anordnung nur passiv empfangen, d.h. er wird bei der zyklischen Ansteuerung der aktiven Funktion übersprungen.

Durch die helixförmige Anordnung ist der den Sensoren 9i gegenüberliegende Bereich zunächst nicht belegt. Gemäß Fig. 2 können somit den einzelnen Sensoren 9i gegenüberliegend schallbeeinflussende Mittel 16 vorgesehen sein, insbesondere
- Reflektoren, die die Reflexionen 14-1 bis 14-5 der Fig. 2 ausblenden und/oder
- schalldämpfende Mittel, die die Reflexionen 14-1 bis 14-5 der Fig. 2 verringern oder verhindern,
so dass die Ausbildung von Rückläufern und zusätzlichen Messpeaks weiter verringert werden kann.

### Bezugszeichenliste

- 1: Extrusionsstrecke
- 2: Extruder
- 3: Schüttgut, insbesondere aus Kunststoff
- 4: Kühltank
- 5: Rohr
- 6: Abzug mit Säge
- 8: Ultraschall-Messvorrichtung
- 9a, 9b, 9i: Sensoren der Ultraschall-Messvorrichtung
- 9x: passiver Sensor
- 10: Steuereinrichtung
- 12: Rohrwand
- 14: ausgesandte Ultraschallwellen
- 14-1: von der Rohrwand 12 reflektierte Ultraschallwellen
- 14-2: vom Sensor zurück reflektierte Ultraschallwellen
- 14-3: Rückläufer
- 14-4: Reflexion des Rückläufers 14-3
- 14-5: zweiter Rückläufer

- 16: reflexionsbegrenzende Mittel, insbesondere schalldämpfende Mittel oder Reflektoren
- A: Achse
- alpha: Versatzwinkel der Sensoren 9i zueinander
- d: Längsabstand der Sensoren 9i zueinander
- Pi: Messpeaks
- S: Messsignal
- ti: Zeitpunkte

## Patentansprüche

1. Ultraschall-Messvorrichtung (8) zum Vermessen von Extrusionsprodukten (5) in einer Extrusionslinie (1), wobei die Ultraschall-Messvorrichtung (8) aufweist
- mehrere Sensoren (9a, 9b. 9c, 9d, ... 9i ), die jeweils Ultraschallwellen (14) aussenden und reflektierte Ultraschallwellen (14-1) detektieren, wobei die Sensoren (9a, 9b, 9c, 9d, ... 9i, ) um eine Achse (A) herum verteilt und auf die Achse (A) ausgerichtet sind,
- eine Steuereinrichtung (10) zum Ansteuern der Sensoren (9a, 9b, 9c, 9d, ...9i) und Aufnehmen von Messsignalen (S) der Sensoren (9i),
**dadurch gekennzeichnet, dass**
die mehreren Sensoren (9i) zueinander
- helixförmig oder schraubenförmig um die Achse (A) herum angeordnet sind, und/oder
- aufeinanderfolgend in sowohl Umfangsrichtung um die Achse (A) als auch in Richtung der Achse (A) zueinander versetzt angeordnet sind, wobei die Steuereinrichtung (10) die Sensoren (9i) derartig ansteuert, dass jeweils ein Sensor (9a) sendet und detektiert und die anderen Sensoren (9b, 9c, 9d, ..., 9i) passiv detektieren.

2. Ultraschall-Messvorrichtung (8) nach Anspruch 1, **dadurch gekennzeichnet, dass** die Steuereinrichtung (10) die Sensoren (9a, 9b, 9c, 9d, ...9i) derartig ansteuert, dass aufeinanderfolgend jeweils ein anderer der mehreren Sensoren aktiv sendet und detektiert und die anderen Sensoren passiv detektieren.

3. Ultraschall-Messvorrichtung (8) nach einem der vorherigen Ansprüche,
**dadurch gekennzeichnet, dass** die Sensoren (9a, 9b, 9c, 9d, ... 9i) eine symmetrische Helix, mit gleichmäßigem Versatzwinkel (alpha) in Umfangsrichtung und gleichmäßigem Längsabstand (d) in Richtung der Achse (A) bilden.

4. Ultraschall-Messvorrichtung (8) nach einem der vorherigen Ansprüche, **dadurch gekennzeichnet, dass** die Steuereinrichtung (10) die helixförmige Anordnung der mehreren Sensoren (9a, 9b, 9c, 9d, ...9i) nacheinander seriell derartig ansteuert, dass jeweils einer der Sensoren (9a) aktiv ist und sendet und empfängt, und die anderen Sensoren (9b, 9c, 9d, ..., 9i) passiv sind und detektieren, insbesondere in zyklischer aktiver Ansteuerung aller Sensoren bis auf mindestens einen weiteren, insbesondere letzten Sensor (9x),
wobei der mindestens eine weitere Sensor (9x) nur passiv detektiert, zur Ausbildung gleicher oder entsprechender Messsignale (S) der mehreren Messungen.

5. Ultraschall-Messvorrichtung (8) nach einem der vorherigen Ansprüche, **dadurch gekennzeichnet, dass** die Steuereinrichtung (10) ausgebildet ist, die helixförmige Anordnung von Sensoren (9a, 9b, 9c, 9d, ...9i) seriell in einer Reihenfolge anzusteuern, die von der geometrischen Reihenfolge in der Helix abweicht.

6. Ultraschall-Messvorrichtung (8) nach einem der vorherigen Ansprüche, **dadurch gekennzeichnet, dass** die Steuereinrichtung ausgebildet ist, mindestens zwei in der geometrischen Reihenfolge beabstandete Sensoren zeitlich überlappend und/oder gleichzeitig als aktive Sensoren (9a) anzusteuern,
insbesondere bei nicht überlappenden Reflexionen, wobei die passiven Sensoren nur Signale von einem der sendenden Sensoren aufnehmen.

7. Ultraschall-Messvorrichtung (8) nach einem der vorherigen Ansprüche, **dadurch gekennzeichnet, dass** mehrere helixförmige Anordnungen von Sensoren (9a, 9b, 9c, 9d, ...9i) derartig ineinander geschaltet sind, dass die Spiralen oder Helixen zueinander in axialer Richtung versetzt sind, insbesondere derartig, dass sich keine Sensoren der mehreren helixförmige Anordnungen gegenüberliegen, insbesondere mit separater Ansteuerung der einzelnen Helixen.

8. Ultraschall-Messvorrichtung (8) nach einem der vorherigen Ansprüche, **dadurch gekennzeichnet, dass** mindestens zwei helixförmige Anordnungen von Sensoren (9a, 9b, 9c, 9d, ...9i) derartig ineinander geschaltet sind, dass sich zumindest einige Sensoren der mindestens zwei Helixen gegenüber liegen,
wobei die Steuereinrichtung (10) aus einer Messung, bei der ein aktiver Sensor (9a) der einen Helix sendet und der gegenüber liegende Sensor der anderen Helix empfängt, eine Ermittlung eines Innendurchmessers und/oder Außendurchmessers des Extrusionsproduktes durchführt.

9. Ultraschall-Messvorrichtung (8) nach einem der vorherigen Ansprüche, **dadurch gekennzeichnet, dass** zumindest einigen Sensoren (9a, 9b, 9c, 9d, ...9i) ein schallbeeinflussendes Mittel (16), z. B. ein Reflektor oder ein dämpfendes Mittel, gegenüberliegt, zur Verhinderung oder Verminderung von Reflexionen (14-2).

10. Ultraschall-Messvorrichtung (8) nach einem der vorherigen Ansprüche, **dadurch gekennzeichnet, dass** die Steuereinrichtung (10) ausgebildet ist, aus den Messsignalen (S), insbesondere aus Laufzeitdifferenzen und/oder der Zuordnung von passiven zum aktiven Sensor (9i). eine oder mehrere der folgenden Eigenschaften zu ermitteln:
eine oder mehrere Schichtdicke(n) (d),
einen Außendurchmesser und/oder Innendurchmesser,
Fehler, z. B. Lunker und/oder Einschlüsse und/oder Unregelmäßigkeiten der Flächen (12a, 12b), z.B. Sagging (5),
Materialeigenschaften des Extrusionsproduktes, insbesondere eine Schallgeschwindigkeit im Material und/oder eine akustische Impedanz.

11. Extrusionsstrecke (1), die aufweist:
einen Extruder (2) zum Aufnehmen von Schüttgut (3) und Ausgeben eines Extrusionsproduktes, insbesondere Rohres (5), entlang einer Achse (A),
einen Abzug (6), der das Extrusionsprodukt (5) abzieht,
einen Kühltank (4), durch den das Extrusionsprodukt (5) geführt wird, und
eine Ultraschall-Messvorrichtung (8) nach einem der vorherigen Ansprüche, die um die Achse (A) herum angeordnet ist, zur Vermessung des Extrusionsproduktes (5).

12. Extrusionsstrecke (1) nach Anspruch 11, **dadurch gekennzeichnet, dass** die Steuereinrichtung (10) zur Ansteuerung mehreren Sensoren (9a, 9b, 9c, 9d, ...9i) der Ultraschall-Messvorrichtung (8) mit einer derartigen Frequenz ausgebildet ist, dass eine vollumfängliche Vermessung des Extrusionsproduktes (5) vorgesehen ist,
insbesondere mit einer Messfolgefrequenz (IFF), die von dem Längsabstand (n) der Sensoren (9i) zueinander unabhängig ist.

13. Extrusionsstrecke (1) nach Anspruch 11 oder 12, **dadurch gekennzeichnet, dass** sie mehrere Ultraschall-Messvorrichtungen (8) nach einem der Ansprüche 1 bis 10 aufweist, insbesondere ineinander geschachtelt und/oder in einem gemeinsamen axialen Messbereich, mit zueinander versetzter Anordnung der Sensoren der mehreren Spiralen oder helixförmigen Anordnungen.

14. Verfahren zur Vermessung eines Extrusionsproduktes (5), bei dem während eines Extrusionsvorgangs das Extrusionsprodukt (5) entlang einer Achse (A) gefördert und von mindestens einer Ultraschall- Messvorrichtung (8) mit mehreren Sensoren (9a, 9b, 9c, 9d...9i) fortlaufend vermessen wird, insbesondere vollumfänglich fortlaufend vermessen wird, wobei die mehreren Sensoren (9i)
- aufeinanderfolgend in sowohl Umfangsrichtung um die Achse (A) als auch in Richtung der Achse (A) zueinander versetzt angeordnet sind, und/oder
- helixförmig oder schraubenförmig um die Achse (A) herum angeordnet sind,
wobei in einer Aktiv-Passiv-Messung jeweils einer der Sensoren (9a) sendet und empfängt und die anderen Sensoren (9b, 9c, 9d, ...9i) passiv detektieren.

15. Verfahren nach Anspruch 14, **dadurch gekennzeichnet, dass** als aktiver Sensor (9a) jeweils aufeinanderfolgend einer der mehreren Sensoren (9a, 9b, 9c, 9d, ...9i) angesteuert wird und die Vermessung zyklisch wiederholt durchgeführt wird, insbesondere jeder der Sensoren oder alle Sensoren bis auf mindestens einen letzten Sensor (9x), der in der aufeinanderfolgenden Anordnung vorzugsweise lediglich passiv misst, zur Ausbildung gleicher Messsignale.

16. Verfahren nach einem der Ansprüche 14 oder 15, **dadurch gekennzeichnet, dass** ein Extrusionsprodukt (5) vermessen wird aus der Gruppe, die besteht aus:
Rohren, Schläuchen, Profilen, Folien, Kabeln, Leitungen,
insbesondere aus Kunststoff oder Gummi z.B. aus durchgängigem oder geschäumtem Material.

17. Verfahren nach einem der Ansprüche 14 bis 16, **dadurch gekennzeichnet, dass** aus den Messsignalen (S) eine oder mehrere der folgenden Eigenschaften ermittelt werden:
eine oder mehrere Schichtdicke(n) (d),
ein Außendurchmesser und/oder Innendurchmesser,
Fehler, z. B. Lunker und/oder Einschlüsse und/oder Unregelmäßigkeiten der Flächen (12a, 12b), z.B. Sagging,
Materialeigenschaften des Extrusionsproduktes, insbesondere eine Schallgeschwindigkeit im Material und/oder eine akustische Impedanz.
